**Europäisches Patentamt**

**European Patent Office**

**Office européen des brevets**

(11) Publication number: **0 358 247**

**A1**

## EUROPEAN PATENT APPLICATION

(21) Application number: **89201742.7**

(22) Date of filing: **30.06.89**

(51) Int. Cl.⁵: **E03F 3/06 , F16L 55/18**

(30) Priority: **09.08.88 NL 8801979**

(43) Date of publication of application:
**14.03.90 Bulletin 90/11**

(84) Designated Contracting States:
**AT BE CH DE ES FR GB GR IT LI LU NL SE**

(71) Applicant: **GULECTRON B.V.**
**P.O. Box 20**
**NL-6243 ZG Geulle(NL)**

(72) Inventor: **Gulikers, Jules Hendrik**
**Mevr. van der Meystraat 22**
**NL-6243 AP Geulle(NL)**

(74) Representative: **Noz, Franciscus Xaverius, Ir.**
**et al**
**Algemeen Octrooibureau P.O. Box 645**
**NL-5600 AP Eindhoven(NL)**

(54) **Device for providing a passage in a side wall of a pipe.**

(57) The invention relates to a device for providing a passage in a side wall of a pipe, from the inside of the pipe, said device being provided with a frame (1) and with a drilling means (4) to be rotated by means of a motor (13). The drilling means (4) with its motor (13) has been mounted on a bearing element (7) which is movable relative to the frame (1), transversely to the longitudinal axis of the device. The bearing element (7) is also rotatable about the longitudinal axis of the device.

Futher the bearing element (7) has been coupled shiftable to a support plate (22) by means of a setting cylinder (23). The setting cylinder (23) has been arranged beside the drilling means (4) and extends parallel to the axis of rotation of the drilling means (4). Thereby is the arrangement so that the support plate (22) is rotatable about the longitudinal axis of the device with respect to the remainder to the device together with the bearing element (7) and the setting cylinder (23).

FIG.1.

The invention relates to a device for providing a passage in a side wall of a pipe from the inside of the pipe, said device being provided with a frame and with a drilling means to be rotated by means of a motor, the drilling means with its motor being mounted on a bearing element which is movable relative to the frame, transversely to the longitudinal axis of the device, and which is rotatable about the longitudinal axis of the device.

Such a device is known from WO-A.86/03818. In said known device the bearing element is supported by a bearing mounted at an end of a trolley and the drilling means has been fixed to a cylinder. Said cylinder is movable in the direction of the axis of rotation of the drilling means by means of a jack arranged below said cylinder. In order to obtain the possibility to displace the drilling means over a sufficient distance in the direction of its axis of rotation said known device will have a cumbersome structure which makes impossible the use of such a device in pipes with a relatively small section.

It is an object of the invention to obtain a device of the kind set forth having a small girth so that the device can be used in lines having a relatively small section.

According the invention this could be obtained as the bearing element has been coupled shiftable to a support plate by means of a setting cylinder arranged beside the drilling means and extending parallel to the axis of rotation of the drilling means, said support plate being rotatable about the longitudinal axis of the device with respect to the remainder of the device together with the bearing element and the setting cylinder.

In use of the structure according the invention there could be obtained a device having a girth, when seen in the longtudinal direction, with retracted drilling means which is relatively small, whilst yet the drilling means can be moved to and from in the direction of its axis of rotation over a relatively great distance.

The invention will be further explained hereinafter with reference to a possible embodiment of a device according to the invention illustrated in the accompanying figures.

Fig 1 is a diagrammatic side view of an embodiment of a device according to the invention.

Fig 2 is a view of the device illustrated in fig 1, arranged in a pipe, seen in the direction according to arrow II in fig 1.

Fig 3 is a larger-scale illustration, partly in view and partly in cross-section, of a part of the device illustrated in fig 1.

Fig 4 is a cross-section of fig 3.

Fig 5 is a section of fig 4, seen according to the line V - V in fig 4, whereby certain parts have been left out in order to be able to illustrate parts located therebehind.

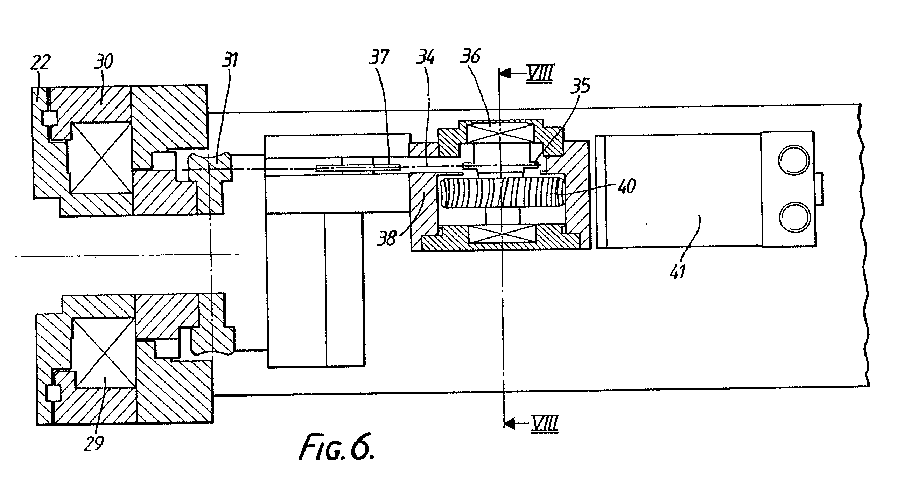

Fig 6 is a section of a few more parts of the device according to the invention, seen in plan view.

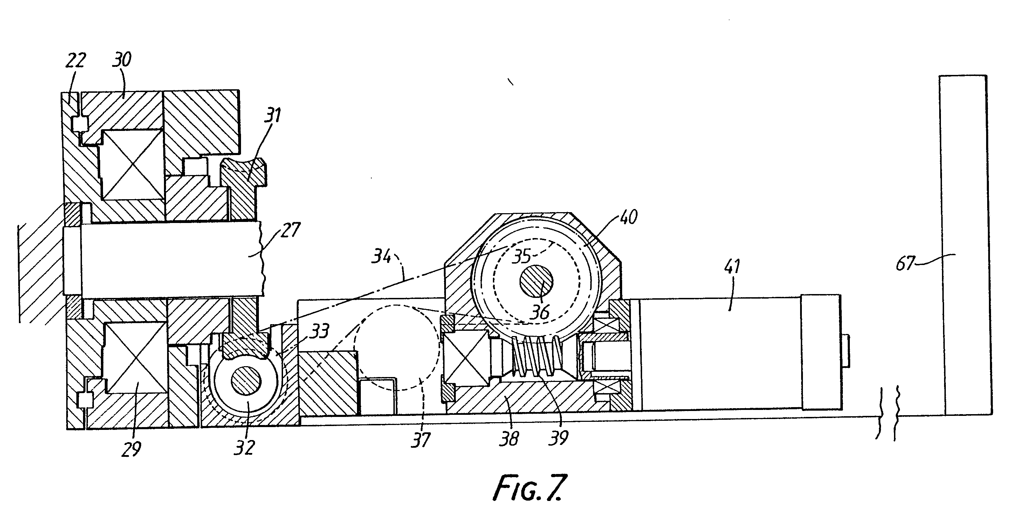

Fig 7 is a section of the parts illustrated in fig 6, seen in side view.

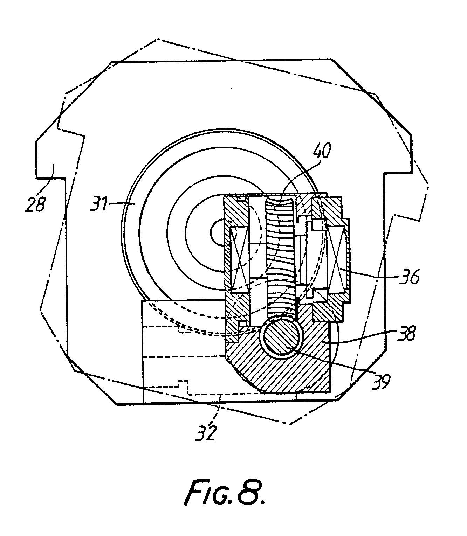

Fig 8 is a section of fig 6, seen according to the line VIII - VIII in fig. 6.

Fig 9 illustrates in section details of the driving mechanism for the wheels supporting the device, seen in plan view.

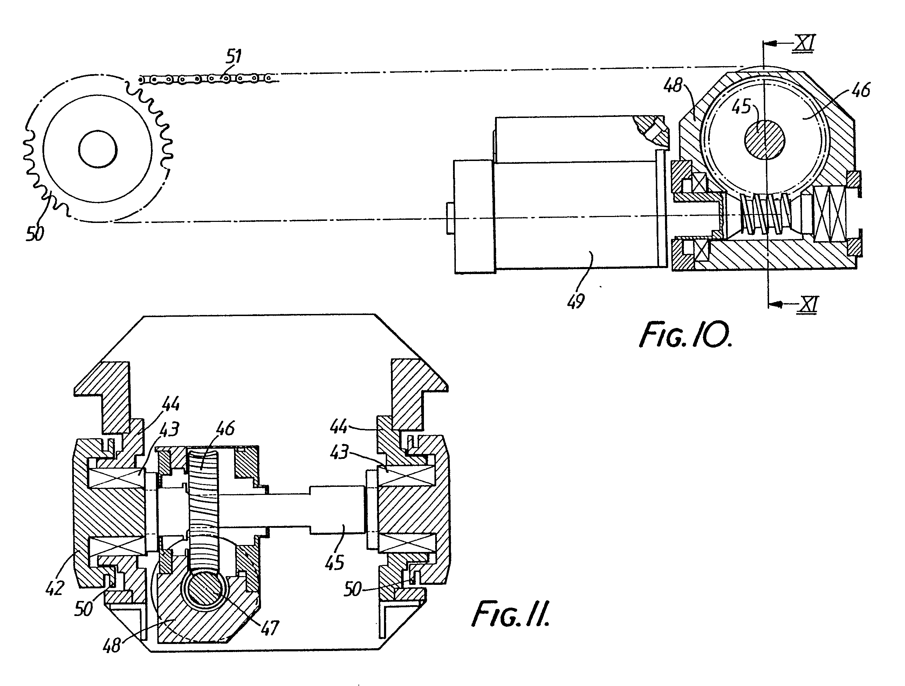

Fig 10 illustrates, partly in view and partly in section, a few of the parts illustrated in fig 9 in side view.

Fig 11 is a section of fig 9, seen in the direction of the line XI - XI.

Fig 12 illustrates details of the mechanism by means of which the device can be fixed relative to the wall of a pipe.

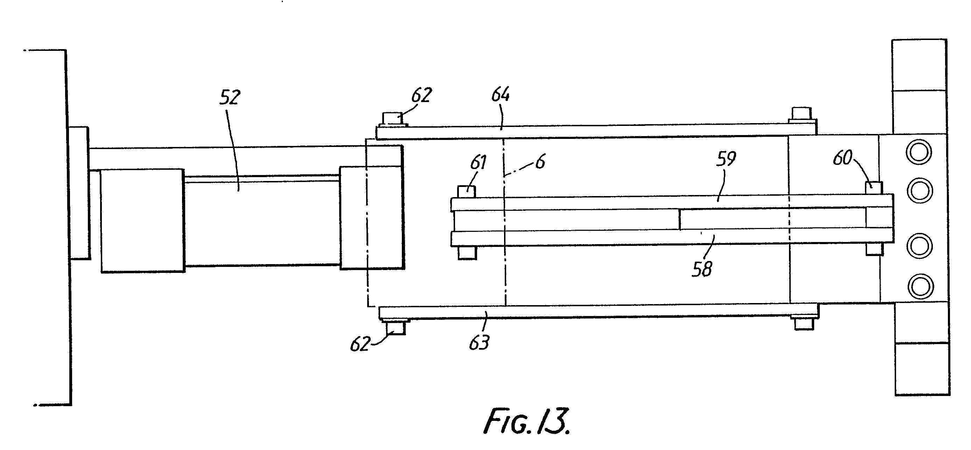

Fig 13 is a plan view of fig 12.

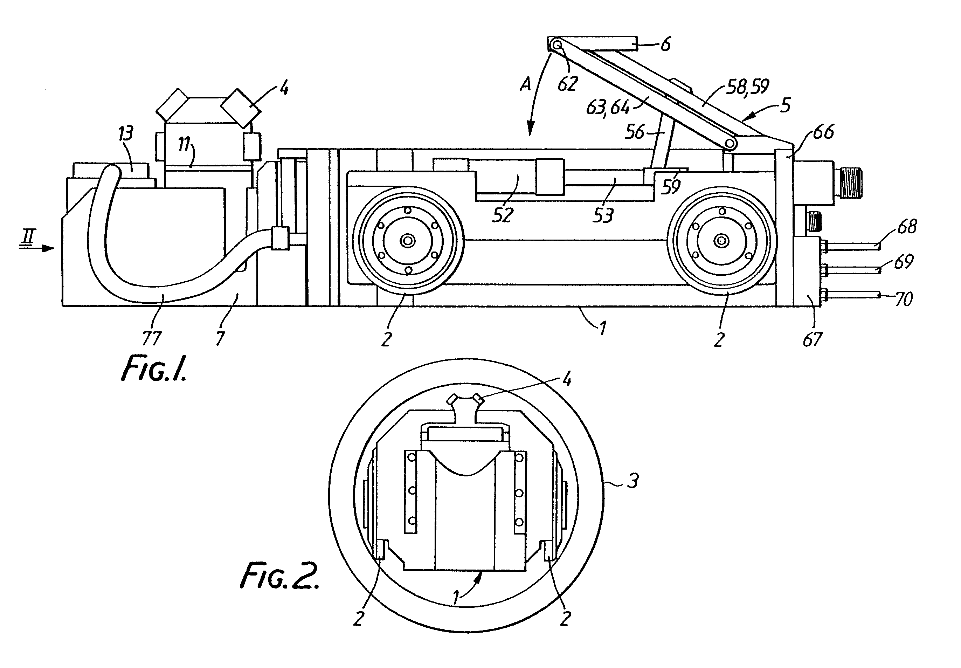

As is diagrammatically illustrated in fig 1 the device comprises a frame 1 which is supported by four running wheels 2, which are arranged in pairs on both sides of the frame 1 and by means of which the device can be moved through a pipe 3 (fig 2). Near one end the device is provided with a suitable drilling means or cutter head 4. Furthermore a clamping plate 6 is provided, movable in vertical direction, on top of the frame by means of a parallellogram mechanism 5, such that when the device is arranged at a desired place in a pipe or the like the clamping plate can be moved upwards relative to the frame in order to press the clamping plate against the inside wall of the pipe in question, in order to anchor the device relative to the pipe.

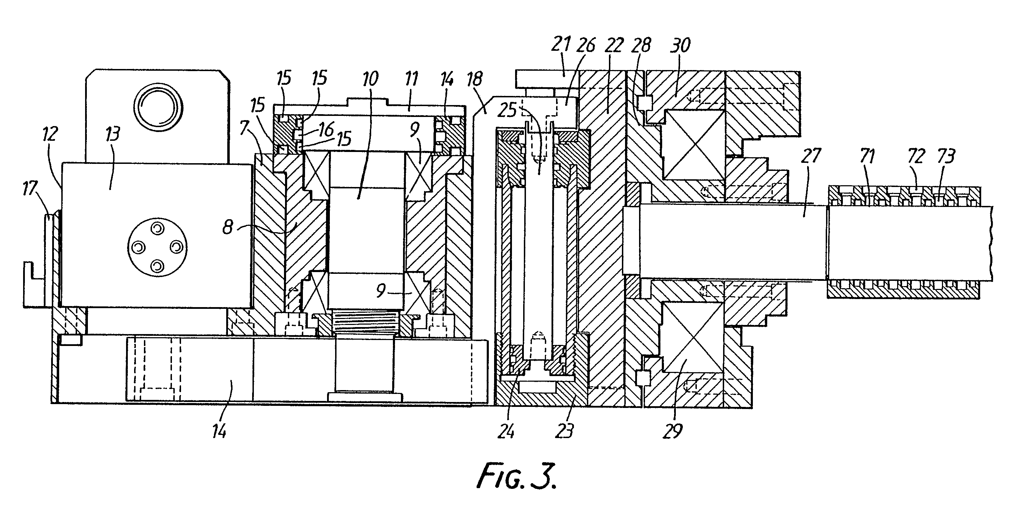

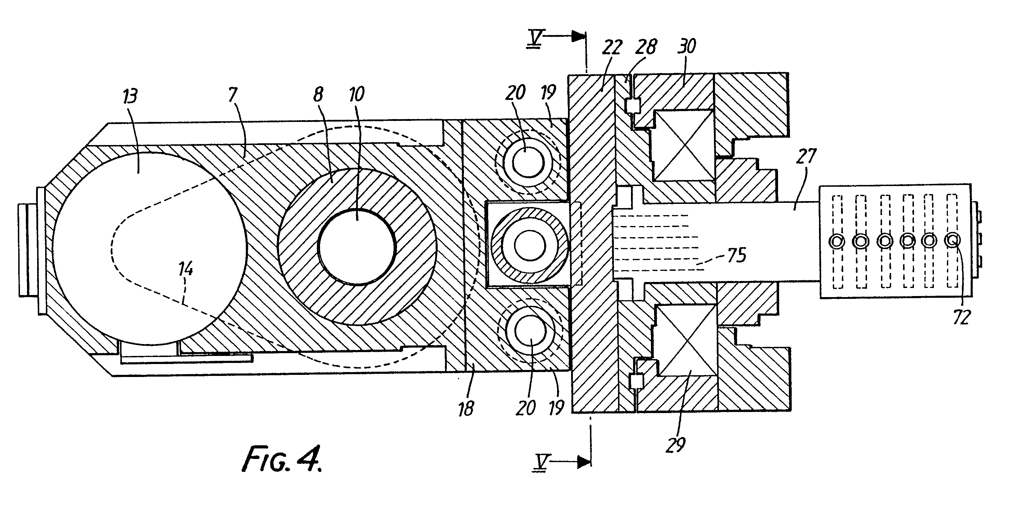

As is further illustrated in the figs 3 - 5 a bush 8 is provided in a block or bearing element 7 forming part of the frame of the device, for rotatably supporting a shaft 10 by means of bearings 9.

At one end there is fixed a connecting plate 11 to the shaft, by means of which connecting plate drilling means or cutter heads 4 can be fixed to the shaft 10.

In a bore 12 recessed in the bearing element 7 there is arranged a hydraulic motor 13, such that the axis of rotation of said motor 13 extends parallel to the central axis of the shaft 10.

The motor 13 and the shaft 10 are coupled together by means of a belt transmission 14 comprising a toothed belt and also comprising gears fixed to the outgoing shaft of the motor and to the shaft 10, so that the shaft 10 with the drill or the milling means 4 fixed thereto can be driven by means of the hydraulic motor 13.

As furthermore appears from fig 3 the upper part of the shaft 10, seen in fig 3, is surrounded by a ring 14 which is enclosed between the block 8 and the ring 11.

In said ring 14 there are provided a number of grooves 15 for accommodating sealing gaskets (not shown). The ring 14 is furthermore provided with a groove 16 located between a pair of gasket grooves and surrounding the shaft 10, to which cooling water can be supplied during operation. Via bores (not shown) provided in the shaft 10 and the plate 11 this cooling water can be supplied under pressure to the cutting means or the milling cutter 4, in order to be able to cool them during operation.

As is furthermore illustrated in fig 3 a support 17 is fixed to one end of the bearing element 7, on which a television camera (not shown) can be mounted, such that during operation the action of the drilling means or the milling cutter 4 can be observed by means of said television camera.

The bearing element 7 is mounted on a plate 18 fixed to one end of said bearing element. At the side of the plate 18 remote from the bearing element 7, near the sides of the plate, there are fixed a few ears 19 located above one another and extending perpendicularly to the plate. A pair of guide pins 20, extending parallel to each other, extend through holes provided in said ears 19. The guide pins are fixed with their ends to ears 21, which are fixed to a plate 22 extending parallel to and spaced from the plate 18.

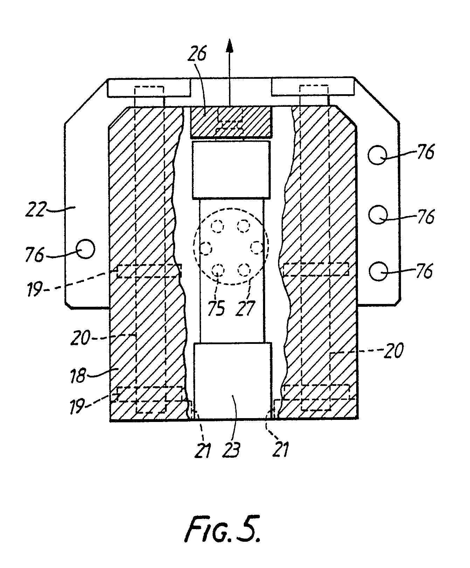

On the plate 22 there is mounted a setting cylinder 23. A piston 24 with a piston rod 25 connected thereto is accommodated in the setting cylinder. The end of the piston rod projecting from the setting cylinder is fixed to an ear 26 which is fixed to the upper side of the plate 18, seen in fig 3, and which extends between the guide pins 20, perpendicularly to the plate 18 (see also fig 5).

The supporting plate 22 has a fixed connection to a shaft 27 extending in the longitudinal direction of the device and to a supporting part 28, which is supported, by means of a bearing 29, by a supporting ring 30 forming part of the frame 1.

To the shaft 27 there is fixed a worm wheel 31, which is in engagement with a worm 32 journalled in the frame 1. To one end of the worm 32 there is fixed a gear 33 which is coupled to a further gear 35 by means of a chain 34, said gear 35 being fixed to a shaft 36 journalled in the frame and crossing the shaft 27 perpendicularly. The chain 34 is thereby also guided along an idler 37 which is adjustably arranged in the frame.

The shaft 36 is journalled in a bearing 38 forming part of the frame 1, in which bearing there is also journalled a worm 39, which worm 39 is in engagement with a worm wheel 40 fixed to the shaft 36.

One end of the worm 39 is fixed to the outgoing shaft of a hydraulic motor 41, whose axis of rotation extends parallel to the longitudinal axis of the device and which is supported by the frame 1 of the device.

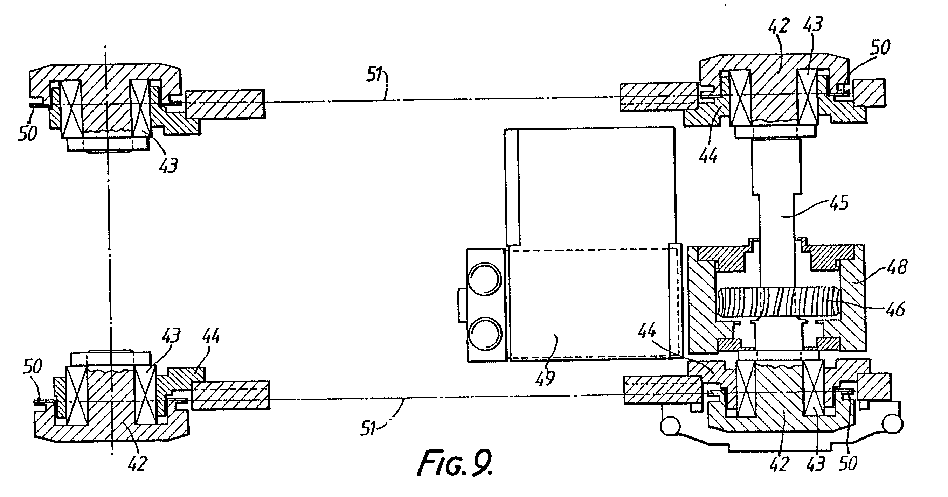

As is diagrammatically illustrated in fig 9 hubs 42 are rotatably supported, by means of bearings 43, by supporting plates 44 forming part of the frame 1. As furthermore appears from fig 9 a pair of hubs, located on both sides of the frame, are mutually connected by a horizontal shaft 45 extending perpendicularly to the longitudinal direction of the device. To said shaft 45 there is fixed a worm wheel 46, which is in engagement with a worm 47, which is rotatably supported by a supporting block 48 forming part of the frame. On said supporting block there is mounted a hydraulic motor 49, whose outgoing shaft is connected to the worm 47.

As furthermore appears from fig 9 the various hubs 42 are provided with gear rings 50 and the two hubs always located on one side of the frame are mutually connected by means of a chain 51 guided around said gear rings.

As will be apparent from the figures also the axis of rotation of the hydraulic motor 49 extends parallel to the longitudinal axis of the device. The motors 41 and 49 are thereby arranged side by side, off the centre of the device, which contributes towards a compact construction of the device.

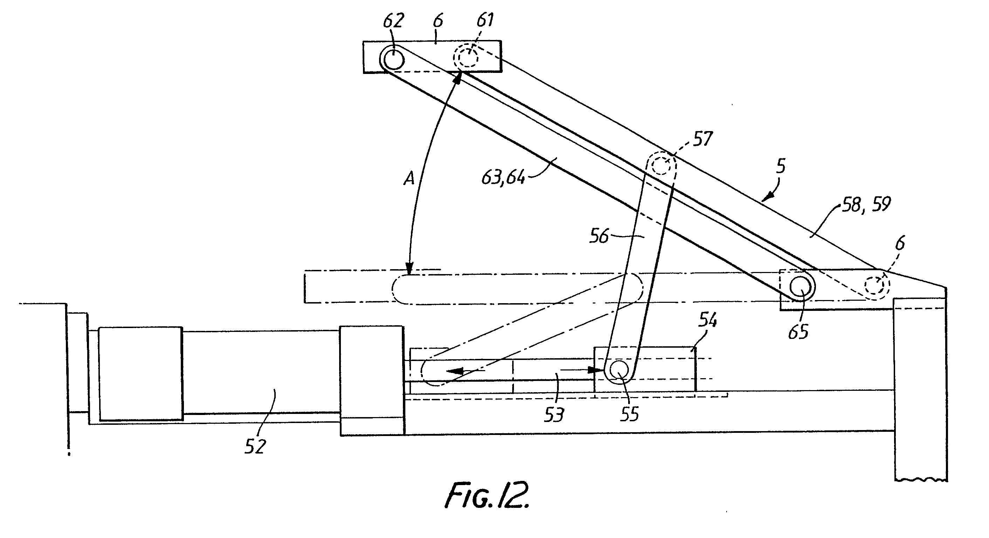

A setting cylinder 52, extending in the longitudinal direction of the device, is provided between the wheels 2 and on top of the device, seen in side view. To the end of the piston rod 53 of the setting cylinder projecting from the setting cylinder 52 there is fixed a sliding block 54 which is movable along the frame 1 of the device in the longitudinal direction of the device. To said sliding block 54 there is coupled the end of a coupling rod 56, by means of a horizontal pivot pin 55 extending perpendicularly to the longitudinal direction of the device. The coupling rod 56 is pivotally coupled with its end remote from the sliding block 54, by means of a pin 57 extending parallel to the pin 55, to a pair of rods 58 and 59 forming part of the parallelogram mechanism 5. The rods 58 and 59 are pivotally coupled to the frame by means of a pin 60 extending parallel to the pin 57, and near their other ends to the clamping plate 6 by means of a pin 61 extending parallel to the pin 60. The ends of further rods 63 and 64, extending parallel to the rods 58 and 59, are pivotally coupled to the clamping plate 6 by means of pivot pins 62 extending parallel to the pin 61. The ends of the rods 63 and 64 remote from the clamping plate 6 are pivotally coupled to the frame 1 by means of pins 65 extending parallel to the pins 62. As will be apparent from fig 12 the pins 60, 61, 62 and 65 are thereby located in the corner points of a parallelogram. A displacement of the sliding block 54 by means of the setting cylinder 52 will therefore cause the clamping plate 6 to pivot upwards or downwards, as indicated by arrow A.

As is furthermore diagrammatically indicated in fig 1 a distributing block 67 is fixed to one end plate 66 of the frame, to which lines 68 - 70 are connected for the supply and discharge of oil for the hydraulic motor and for the supply of cooling water.

In order to be able to supply oil to the hydraulic motor 13 and the setting cylinder 23 and to be able to supply cooling water to the drilling means 4 a distributing bush 71 surrounding the shaft 27 is provided on the shaft 27. In the bush 71 there are provided a number of radial bores 72 provided with screw thread, for connecting lines (not shown) for the supply and/or discharge of oil to and from the setting cylinder 23 and the hydraulic motor 13 respectively and for the supply of cooling water. Said bores 72 open into circular grooves 73 provided in the inside wall of the bush 71. In the inside wall of the bush 71, between the grooves 73, there are provided additional grooves 74 for accommodating gaskets (not shown).

The grooves 73 are in open communication with bores 75 provided in the longitudinal direction of the shaft 27 and illustrated only diagrammatically and partly in the figures. Said bores 75 open into passages (not shown) provided in the supporting plate 2. The passages for the supply and discharge of oil to and from the setting cylinder 23 are directly connected to passages (not shown) provided in the setting cylinder 23.

The passages, provided in the plate 22, for the supply and discharge of oil to and from the motor 13 and for the supply of cooling water open into connecting openings 76 provided in the boundary plane of the supporting plate 22, directed towards the shaft 10 and the motor 13, as illustrated in fig 5. Flexible lines, such as the line 77 illustrated in fig 1, can be connected to said connecting openings 76 for the passage of the fluid aimed at.

During operation the device can be placed in a pipe or the like which is to be worked. Putting the various setting cylinders and hydraulic motors into operation can be done by means of valves and the like (not shown) which can be electrically operated by remote control. By putting the hydraulic motor 49 into operation the wheels supporting the device can be driven in order to move the device through the pipe. The clamping plate 6 will thereby be in its retracted position, so that the clamping plate does not impede the movement of the device. The movement of the device through the pipe can be observed from a distance by means of the television camera (not shown) provided on the support 17.

When the device has arrived at its correct position for providing a hole in the pipe and/or in a lining provided in the pipe the drive of the wheels will be stopped and the clamping plate 6 can be moved upwards, in the manner described above, by means of the setting cylinder 51 in order to be pressed against the inside wall of the pipe. Thus the device can be anchored relative to the pipe. Then the shaft 27 can be rotated, if desired, by putting the hydraulic motor 41 into operation, as a result of which the bearing element 7 supporting the drilling means will be rotated about the longitudinal axis of the device, in order to arrange the axis of rotation of the drilling means 4 at the desired angle relative to the horizontal. When the drilling means is in its correct position the drilling means 4 can be rotated by putting the hydraulic motor 13 into operation. At the same time the drilling means can be moved in the direction of and through the wall of the pipe or a lining provided in the pipe, by moving the bearing element supporting the drilling means, by means of the setting cylinder 23 extending parallel to the central axis of the shaft 10, in the direction of the central axis of the shaft 10 relative to the supporting plate 22.

## Claims

1. Device for providing a passage in a side wall of a pipe, from the inside of the pipe, said device being provided with a frame (1) and with a drilling means (4) to be rotated by means of a motor(13)-,the drilling means (4) with its motor (13) being mounted on a bearing element (7) which is movable relative to the frame (1),transversely to the longitudinal axis of the device,and which is rotatable about the longitudinal axis of the device,characterized in that the bearing element (7) has been coupled shiftable to a support plate (22)- by means of a setting cylinder (23) arranged beside the drilling means (4) and extending parallel to the axis of rotation of the drilling means (4), said support plate (22) being rotatable about the longitudinal axis of the device with respect to the remainder of the device together with the bearing element (7) and the setting cylinder (23).

2. Device according claim 1,characterized in that on both sides of the setting cylinder (23) there has been fixed guide pins (20) for the bearing element (7) said guide pins (20) extending parallel to the setting cylinder (23).

3. Device according to claim 2, characterised in that the setting cylinder is arranged between the support plate (22) and a plate (18) arranged parallel to the support plate (22) and forming an end of the bearing element (7),said plate having protruding ears (19) having holes for accomodating the guide pins (20) ,a further ear (26) being provided on an edge of of the plate (18) and being connected to the setting cylinder (23)

4. Device according to any of the preceding claims,characterized in that a shaft (10) supporting the drilling means (4) and a hydraulic motor (13) for driving the drilling means (4) are arranged in the bearing element (7) with their axes of rotation parallel to each other and are mutually coupled by means of a transmission mechanism (14).

5. Device according to claim 4,characterized in that the hydraulic motor (13) has been arranged in the bearing element (7) at the side of the shaft (10) supporting the drilling means (4) remote from the setting cylinder (23) device.

6. Device according to any one of the preceding claims, characterized in that the bearing element (7) is connected to a shaft (27) journalled in the frame (1) of the device and extending in the longitudinal direction of the device,to which shaft there is fixed a worm wheel (31)which is in engagement with a worm (32) which is connected,via a chain transmission (33-35) and a further worm and worm wheel transmission (39,40), to a hydraulic motor (41) supported by the frame (1) of the device,said hydraulic motor(41) extending in the longitudinal direction of the device.

7. Device according to claim 6,characterized in that the shaft (27) is surrounded by a bush (71) on which lines for the supply and/or the discharge of oil for the hydraulic motor (13)of the drilling means (41) and of the setting cylinder (23) are provided and which are in communication with passages (75) provided in the shaft (27) ,via grooves (73) provided in the interior of the bush(71).

8. Device according to claim 7,characterized in that the passages (75) provided in the shaft (27) are in communication with the setting cylinder (23)-,via passages provided in the supporting plate (22) supporting the setting cylinder (23).

9. Device according to claims 7 or 8,characterized in that passages are provided in the supporting plate (22) supporting the setting cy linder (23),which passages on the one hand are in communication with passages (75) provided in the shaft (27)and which on the other hand are connected ,via flexible lines (77) ,to the hydraulic motor (13).

10. Device according to any one of the preceding claims,characterized in that at each side of the device a pair of wheels(2) has been arranged and both wheels of each pair are mutually coupled by means of a chain (&1),whilst two wheels arranged at both sides of the frame are fixed to a shaft (45) journalled in the frame (1),to which shaft (45) there is fixed a worm wheel (46) which is in engagement with a worm (47) fixed to the outgoing shaft of a hydraulic motor (49).

11. Device according to any one of the preceding claims,characterized in that,seen in plan view,the motor (49) for driving the wheels (2) and the motor (41) for driving the shaft (27) connected to the bearing element (7) are arranged side by side in the frame of the device.

12. Device according to any one of the preceding claims,characterized in that at least one passage (75) is provided in the shaft (27) connected to the bearing element (7),which passage is in cummunication,via a passage provided in the supporting plate (22) supporting the setting cylinder (23)-,with a line for the supply of cooling water to the drilling means (4).

13. Device according to any one of the preceding claims, characterized in that an anchording means(6) is provided,adjustable in vertical direction,at the upper side of the device.

14. Device according to claim 13,characterized in that the anchoring means is formed by a clamping plate (6),which is vertically adjustable connected to the frame by means of a parallellogram mechanism (58,59, 63,64).

15. Device according to claim 14,characterized in that a setting cylinder (52,53) ,extending in the longitudinal direction of the device, provided on top of the frame (1),by means of which setting cylinder (52,53) the parallellogram mechanism (58,59,63,64) can be pivoted.

FIG.1.

FIG.2.

EP 0 358 247 A1

EP 0 358 247 A1

FIG. 3.

*FIG. 4.*

EP 0 358 247 A1

FIG. 5.

Fig.6.

*Fig.7*

EP 0 358 247 A1

*Fig.8.*

*Fig. 9.*

FIG. IO.

FIG. II.

Fig. 12.

FIG. 13.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | WO-A-8 603 818 (HIMMLER)<br>* Whole document *<br>--- | 1,4,8 | E 03 F 3/06<br>F 16 L 55/18 |
| A | DE-A-2 524 969 (LAUMANN)<br>* Pages 6,7; figures 1,2 *<br>--- | 1,3,14,<br>15 | |
| A | US-A-4 442 891 (WOOD)<br>* Whole document *<br>----- | 1 | |

TECHNICAL FIELDS
SEARCHED (Int. Cl.5)

E 03 F
F 16 L

The present search report has been drawn up for all claims

| Place of search | Date of completion of the search | Examiner |
|---|---|---|
| THE HAGUE | 15-11-1989 | HANNAART J.P. |